# NEUE EUROPÄISCHE PATENTSCHRIFT

(11) **EP 1 377 091 B2**
(45) Veröffentlichungstag und Bekanntmachung des Hinweises auf die Entscheidung über den Einspruch: **17.08.2011**
(45) Hinweis auf die Patenterteilung: 21.12.2005
(21) Anmeldenummer: 03013699.8
(22) Anmeldetag: 17.06.2003
(51) Int. Cl.: H04W 8/24

(54) **Zugangssteuerung von Anwendungen in einer Mikroprozessorkarte in einem Telekommunikationsnetz**
Access control to applications in a microprocessor card in a telecommunications network
Contrôle d'accès à des applications dans une carte à puce dans un réseau de télécommunications

(30) Priorität: 18.06.2002 DE 10227091
(43) Veröffentlichungstag der Anmeldung: 02.01.2004
(73) Patentinhaber: E-Plus Mobilfunk GmbH & Co. KG, 40468 Düsseldorf (DE)
(72) Erfinder: Witt, Christof, 5319 Weilerswist (DE); Renner, Christoph, 40470 Düsseldorf (DE)
(74) Vertreter: Beyer, Rudi

(56) Entgegenhaltungen:
- EP-A- 1 043 906
- FR-A- 2 805 912
- US-B1- 6 301 484
- "CELLULAR TELEPHONE WITH OVER-THE AIR SOFTWARE DOWNLOAD CAPABILITY DISCLOSED BY ERICSSON INC" IBM TECHNICAL DISCLOSURE BULLETIN, IBM CORP. NEW YORK, US, Bd. 41, Nr. 1, 1998, Seite 263 XP000772100 ISSN: 0018-8689

## Beschreibung

Die Erfindung betrifft ein Verfahren zum Zugänglichmachen von Informationen in Telekommunikationsnetzen, unter Einbeziehung wenigstens eines Mobilfunknetzes, bei welchem einem Mobilfunkendgerät oder mehreren Mobilfunkendgeräten jeweils eine Mikroprozessörkarte mit entsprechender Applikation zur Kommunikation mit dem betreffenden Telekommunikationsnetz zugeordnet ist bzw. sind.

Des weiteren betrifft die Erfindung eine Kommunikätionskarte zur Verwendung in Mobilfunkendgeräten, wobei das Mobilfunkendgerät für den Mobilfunk nach GSM-und/oder UMTS-Standard verwendbar ist und die Mikroprozessorkarte mit entsprechender Applikation zur Kommunikation mit dem betreffenden Telekommunikationsnetz versehen ist.

In neueren Mobilfunkendgeräten werden Mikroprozessorkarten (ICC) verwendet, mit der sich sowohl zum Beispiel im GSM-, als auch im UMTS-Netz telefonieren läßt. Will ein Kunde zum Beispiel den Zugang zum UMTS-Netz nicht mehr in Anspruch nehmen, müßte jedes Mal ein Umtausch der betreffenden Mikroprozessorkarte erfolgen, damit der nicht mehr gewünschte UMTS-Netzzugang nicht mehr in Anspruch genommen werden kann. Ebenso wäre jeweils ein Umtausch erforderlich, falls der betreffende Kunde zum Beispiel vom reinen GSM-Zugang wieder zum UMTS-Netzzugang zurückwechseln will.

Die vorerwähnten Maßnahmen sind mit erhöhtem-Verwaltungsaufwand und demgemäß auch mit Kosten verbunden.

Aus der EP 0 748 135 A2 ist ein System vorbekannt, das mit Hilfe von einem speziell definierten Typ von Nachrichten, in Kommunikation mit einem speziellen Typ von SIM-Karte steht. Das System ist an ein GSM-Netzwerk für Mobiltelefone angebunden, soll allerdings nicht auf GSM-Netzwerke beschränkt sein, sondern eine Anbindung an ein nationales zellulares Netzwerk oder an ein Festnetz ebenfalls ermöglichen. Eine sogenannte "Host-Station" dieses Systems, die über ein Modem an ein GSM-Kernnetzwerk angeschlossen ist, sendet eine in ein sicheres Format umgewandelte proprietäre SMS-Nachricht, die sogenannte "ECSmessage" (Embedded Command Stream), über das GSM Vermittlungs- und Radionetzwerk zu einem Mobiltelefon, das die Nachricht zur SIM durchstellt. Diese Nachricht wird dann in einem von der Nachricht adressierten Speicherbereich der speziellen SIM-Karte abgelegt und kann vom Nutzer des Endgeräts, in dem die SIM eingelegt ist und welches auf die SIM zugreift, nicht gelöscht werden. Die SIM-Karte besitzt auch speziell gesicherte Speicherbereiche, die vom Endgerät nur ausgelesen werden können, wenn der Nutzer eine vorbestimmte PIN eingibt. Ein beschriebenes Anwendungsszenario besteht zum Beispiel darin, dass Daten aus dem Speicherbereich der SIM-Karte genutzt werden, um einen Autoverleih zu kontaktieren und eine direkte Zahlung vorzunehmen. Die Realisierung dieser speziellen SIM-Karte erfordert eine Sonderentwicklung von zusätzlichen Hardware- und Software-Komponenten. Die SIM-Karte kann um zusätzliche Anwendungen "Over the Air" erweitert werden, um als Kreditkarte, als Ausweis oder Führerschein oder dergleichen benutzt zu werden. Mithin definiert diese Druckschrift eine proprietäre Variante eines heutzutage von Mobilfunk-Operatoren genutzten OTA-Systems, das die Daten und die Datenstruktur der beim Kunden befindlichen Karten mit Hilfe eines Servers rekonfigurieren kann.

Die WO 97/42783 bezieht sich auf ein Verfahren und Apparaturen zur Aktivierung von "Multimode/Multiband radio telephone handsets". Dies ist erforderlich, um speziell in den USA eine ungestörte drahtlose Kommunikation zu ermöglichen, da dort Mobilfunkgeräte gebaut werden, welche im analogen (800 bis 900 MHz) und im digitalen Modus (PCS 1900, GSM) betrieben werden können. Digitale PCS 1900-Geräte (basierend auf dem GSM-Standard, das heißt ausgestattet mit SIM und der Teilnehmerkennung IMSI in der SIM) sind nach dem Kauf noch nicht in dem Hintergrundsystem des Netzproviders aktiviert und somit nicht betriebsbereit. Diese Geräte können "Over the Air" (OTA) mit Hilfe von GSM/SMS-Service aktiviert werden. Beim sogenannten "first call" nach Kauf des Geräts wird die IMSI ins Netz übertragen und der Teilnehmer wird automatisch im sogenannten customer service center als neuer Teilnehmer erkannt. Das sogenannte customer service center überträgt die notwendigen Daten zum sogenannten billing system des Netzbetreibers, in dem der Teilnehmer vollständig aktiviert und eine Teilnehmerrufnummer (MSISDN) zugewiesen wird. Die MSISDN wird via SMS zum Teilnehmer geladen und in der SIM gespeichert. Der Aktivierungsprozess für PCS 1900 ist damit abgeschlossen. Um ein analoges Mobilfunkgerät (AMPS Telephone) zu aktivieren, benötigt der Käufer die Hilfe eines erfahrenen Verkäufers. Der analoge Modus des "Multimode/Multiband radio telephone handsets" kann nicht via OTA aktiviert werden und muss von einem erfahrenen Verkäufer am "Point of Sales" aktiviert werden, um mögliche Programmierungsfehler zu vermeiden. Die primäre Aufgabe dieser Druckschrift besteht nun darin, die oben beschriebenen Komplikationen bei der Aktivierung von "Multimode/Multibänd radio telephone handsets" zu lösen. Des weiteren soll eine "Over the Air"-Programmierung für den analogen Modus des "Multimode/Multiband radio telephone handsets" in Verbindung mit der "Over the Air"-Aktivierung des digitalen Modus (GSM) realisiert werden. Des weiteren sind ein System und ein Verfahren zur allgemeinen "Multimode/Multiband"-Aktivierung via OTA für "Multimode/Multiband radio telephone handsets" in dieser Druckschrift beschrieben. Mithin befasst sich diese Druckschrift mit der Lösung des Problems bei der Aktivierung von "Multimode/Multiband radio telephone handsets". Bei der "Over the Air"-Aktivierung des analog/digital-Endgeräts geht es um den Aktivierungsprozess des Teilnehmers im Zusammenhang mit seinem Endgerät und nicht um das Thema Zugangssteuerung im Netzwerk mit Hilfe einer Mikroprozessorkarte.

Der Erfindung liegt die Aufgabe zugrunde, ein Verfahren gemäß der vorausgesetzten Gattung dahingehend zu verbessern, daß der Verwaltungsaufwand gering und damit auch die Kosten minimiert werden können.

Des weiteren liegt der Erfindung die Aufgabe zugrunde, eine Mikroprozessorkarte vorzuschlagen, die vom Netzbetreiber gesteuert wahlweise den Zugang zu verschiedenen Telekommunikationsnetzen oder im Telekommunikationsnetz befindlichen Diensten mit Hilfe von freigeschalteten Applikationen der Karte erlaubt.

Die Aufgabe betreffend das Verfahren wird durch die in **Patentanspruch 1** wiedergegebenen Merkmale gelöst.

Bei dem erfindungsgemäßen Verfahren wird eine UICC als Multiapplikationskarte verwendet, das heißt, die physikalische Smart Card für den Mobilfunk der 3. Generation (UMTS). Auf einer UICC können sich mehrere Applikationen befinden, zum Beispiel eine oder mehrere USIM-Applikation(en), eine SIM-Applikation, aber auch Banking- oder andere Applikationen. Ein UMTS-Telefon greift gemäß ETSI/3GPP Standard auf die USIM-Applikation zu.

Wird die UICC in ein UMTS-Telefon eingelegt, greift das Telefon auf die USIM-Applikation zu, der Kunde kann sich in das UMTS-Netz einbuchen.

Wird die UICC in ein GSM-Telefon eingelegt, greift das Telefon auf die SIM-Applikation zu, der Kunde kann sich nur in das GSM-Netz einbuchen. Der Kunde, also seine UICC, wird netzseitig anhand der IMSI identifiziert. Da dieselbe IMSI sowohl von der USIM, als auch von der SIM-Applikation genutzt wird, kann netzseitig nicht unterschieden werden, ob der Kunde gegenwärtig die SIM- oder die USIM-Applikätion benutzt.

Will der Netzbetreiber verhindern, dass ein Kunde (mit 2G/3G-fähigen UMTS-Telefon und UICC) das UMTS-Netz benutzt, müsste seine UICC gesperrt werden und eine neue Mikroprozessor-Karte mit neuer IMSI an den Kunden ausgegeben werden. Dies wird bei dem erfindungsgemäßen Verfahren vermieden, weil die USIM-Applikation auf der UICC durch den Netzbetreiber per Fernsteuerung deaktiviert wird. Der Kunde kann sich nur noch in das GSM-Netz einbuchen. Genauso kann der Netzbetreiber die USIM-Applikation wieder aktivieren, so daß der Kunde zu einem späteren Zeitpunkt erneut UMTS-Netzzugang bekommt.

In allen Fällen liegt die Kontrolle dabei beim Netzbetreiber, nicht beim Kunden. Es handelt sich um eine UICC-basierte Lösung, die eine gemäß ETSI/3GPP Standard via OTA oder via Kartenlesegerät vom Netzbetreiber ansprechbare UICC nutzt und keine Anpassung an den Endgeräten oder der Netztechnik erfordert.

Ferner ist das Aktivieren/Deaktivieren nicht nur auf die USIM-Applikation beschränkt, sondern kann für sämtliche Applikationen auf der UICC genutzt werden, also auch für etwaige Banking-, Gaming- oder ähnliche Applikationen, die sich physikalisch auf der UICC befinden, aber durch den Netzbetreiber erst freigeschaltet werden müssen, zum Beispiel nach Entrichtung einer Nutzungsgebühr. Der Vorteil liegt bei der erfindungsgemäßen Verfahrensweise somit darin, daß der Mobilfunk-Kunde, welcher einen Status-Wechsel vom 2G- zum 3G-Kunden bzw. vom 3G- zum 2G-Kunden unternimmt, nicht mehr zum physikalischen SIM-Karten-Tausch gezwungen wird. Der Kunde muß weder seine gespeicherten Telefonbucheinträge übertragen, noch sich eine neue PIN merken.

Für den Netzbetreiber entfällt ein erheblicher Administrationsaufwand, da die Subscriber-Daten (IMSI) weiterhin ihre Gültigkeit behalten.

Des weiteren entfallen Kosten für die Mikroprozessorkarten, Logistik, und so weiter. Der Wechsel zwischen den Applikationen kann zudem in Echtzeit erfolgen und theoretisch unendlich oft wiederholt werden.

Nach alledem kann somit der Operator bzw. Netzbetreiber wie bei einem elektrischen Schalter durch Fernsteuerung eine Applikation freigeben oder sie wieder deaktivieren. Auf diese Weise ist z. B. ein leichter Wechsel zwischen GSM- als auch UMTS-Netz mit dessen Nutzungsmöglichkeiten gegeben.

Es wird davon ausgegangen, daß der Kunde ein UMTS-Telefon und eine UICC benutzt.

Alle Applikationen auf der UICC, außer der SIM-Applikation, sind im File EF DIR mit einem Pointer auf ihre Adresse verzeichnet. Dieses File ist in der Spezifikation ETSI TS 102 221 definiert.

Laut Spezifikation 3GPP TS 31.102 wählt die UICC nach dem Einschaltvorgang eine USIM-Applikation aus EF_DIR aus. Falls keine USIM-Applikation in EF_DIR eingetragen ist oder EF_DIR gar nicht vorhanden ist, wird die SIM-Applikation auf der UICC gewählt.

Dies bedeutet, daß beim Vorhandensein einer USIM, diese immer Vorrang vor einer SIM-Applikation hat. Um nun trotz Vorhandensein der USIM auf die SIM-Applikation zugreifen zu können, sollen durch den Operator gesteuert die USIM-Applikationen in EF_DIR unsichtbar gemacht werden, obwohl die Applikation weiterhin physikalisch auf der UICC vorhanden ist. Dieser Vorgang kann entsprechend rückgängig gemacht werden.

Das Ein-/Ausschalten erfolgt per Remote Konfiguration, entweder über einen physikalischen Zugriff per Kartenleser, oder per OTA. Dabei werden Kommandos an die SIM-Karte übertragen, aufgrund deren EF_DIR entweder deaktiviert wird (invalidate), oder mit neuem Inhalt beschrieben wird (update). Um derartige Operationen auf der UICC vorzunehmen, wird u. a. ein OTA-Key benötigt, der nur dem Netzbetreiber bekannt ist.

Das technische Verfahren, auf Files der UICC Operationen wie Read, Update, Invalidate/Deactivate oder Rehabilitate/Activate durchzuführen, ist bekannt und durch 3GPP und andere Standardisierungskörper spezifiziert. Ebenso ist die Durchführung dieser Operationen über die Luftschnittstelle bekannt und wird bereits für andere Files benutzt. Dieses Verfahren wird Over The Air, kurz OTA genannt.

### Beispiel

### a) USIM-Applikation aktiviert

Das File EF_DIR enthält für jede auf der UICC vorhandene Applikation einen Eintrag mit dem Application Identifier (AID) dieser Applikation, wie im folgenden qualitativ dargestellt:

| EF_DIR | |
|---|---|
| 1 | ADF_USIM |
| 2 | ADF_Banking Applikation |
| ··· | ··· |

### b) USIM-Applikation deaktivieren

Durch Remote Konfiguration wird nun ein Update-Kommando auf EF_DIR ausgeführt, und damit der zur USIM-Applikation gehörende Record in EF_DIR (im Beispiel oben Record 1) gelöscht.

| EF_DIR | |
|---|---|
| 1 | ADF_Banking Applikation |
| ··· | ··· |
| ··· | ··· |

Damit ist für ein UMTS-Telefon die USIM-Applikation nicht mehr verfügbar, es wird statt dessen auf die SIM-Applikation zugegriffen.

Alternativ kann das gesamte File EF_DIR durch ein Invalidate/Deactivate-Kommando deaktiviert werden.

Auch hier ist für ein UMTS-Telefon die USIM-Applikation nicht mehr verfügbar, es wird statt dessen auf die SIM-Applikation zugegriffen. Zusätzlich sind in diesem Fall auch alle anderen Applikationen mit Ausnahme der SIM-Applikation, nicht mehr verfügbar.

### c) USIM Applikation aktivieren

Umgekehrt kann durch ein erneutes Update-Kommando natürlich die USIM-Applikation wieder aktiviert werden.

| EF_DIR | |
|---|---|
| 1 | ADF_USIM |
| 2 | ADF_Banking Applikation |
| ··· | ··· |

Damit greift ein UMTS-Telefon wieder auf die USIM-Applikation, nicht mehr auf die SIM-Applikation zu. Die Nutzung des UMTS-Netzes ist damit möglich.

Wurde vorhergehend das gesamte File EF_DIR deaktiviert, kann durch ein Rehabilitate/Activate-Kommando das gesamte File EF_DIR wieder aktiviert werden.

Damit ist für ein UMTS-Telefon die USIM-Applikation und alle anderen in EF_DIR aufgelisteten Applikationen wieder verfügbar.

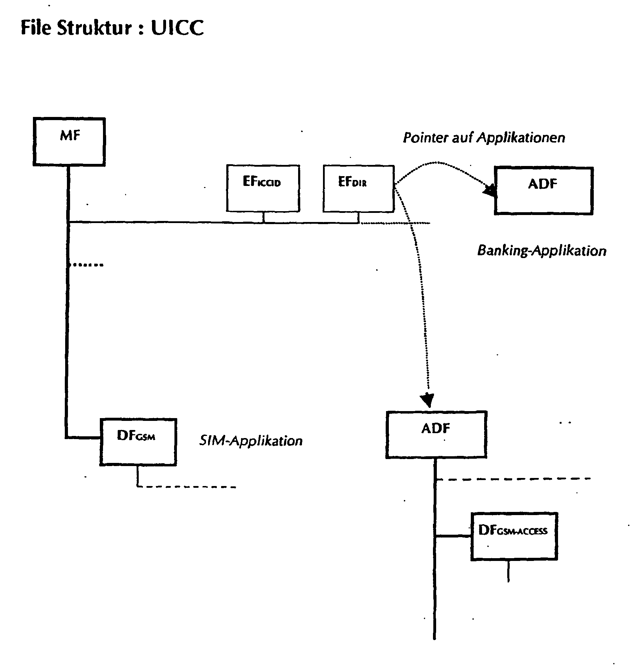

In der Zeichnung ist die Erfindung beispielsweise veranschaulicht.

Die in der Zusammenfassung, in den Patentansprüchen und in der Beschreibung beschriebenen sowie aus der Zeichnung ersichtlichen Merkmale können sowohl einzeln als auch in beliebigen Kombinationen für die Verwirklichung der Erfindung wesentlich sein.

## Patentansprüche

1. Verfahren zum Zugänglichmachen von Informationen in Telekommunikationsnetzen, unter Einbeziehung wenigstens eines Mobilfunknetzes, bei welchem einem Mobilfunkendgerät oder mehreren Mobilfunkendgeräten jeweils eine Mikroprozessorkarte mit entsprechender Applikation zur Kommunikation mit dem betreffenden Telekommunikationsnetz zugeordnet ist bzw. sind, **dadurch gekennzeichnet, dass** die Mikroprozessorkarte als Multiapplikationskarte (UICC) auch für den Mobilfunk nach UMTS-Standard ausgebildet ist und die USIM-Applikation auf der Multiapplikationskarte durch den Netzbetreiber durch Signale zwecks Status-Wechsel vom 3G-zum 2G-Netz bzw. vom 2G- zum 3G-Netz ferngesteuert via OTA oder via Kartenlesegerät deaktiviert oder aktiviert wird.

## Claims

1. Method of making information in telecommunication networks accessible, using at least one mobile phone network, by which one or more wireless telecommunication terminal devices is or are each allocated a microprocessor card with corresponding application for communication with the relevant telecommunication network, **characterised in that** the microprocessor card is designed also as a multi-application card (UICC) for wireless telecommunication in accordance with the UMTS standard and the USIM application is for the purpose of status change from the 3G to the 2G network or from the 2G to the 3G network remotely deactivated or activated by the network operator by means of signals via OTA or a card reading device.

## Revendications

1. Procédé destiné à rendre des informations accessibles dans des réseaux de télécommunication, en impliquant au moins un réseau de téléphonie mobile dans lequel une carte à microprocesseur respective, contenant l'application correspondante permettant de communiquer avec le réseau de télécommunication concerné, est attribuée à un terminal de téléphonie mobile ou à plusieurs terminaux de téléphonie mobile, **caractérisé en ce que** la carte à microprocesseur en tant que carte multi-applications (UICC) est également configurée pour la téléphonie mobile selon la norme UMTS, et **en ce que** l'application USIM sur la carte multi-applications est désactivée ou activée par l'exploitant du réseau au moyen de signaux permettant de changer de statut, c'est-à-dire de passer du réseau 3G au réseau 2G ou du réseau 2G au réseau 3G, de façon télécommandée via OTA ou via un lecteur de carte.
